(19)

Europäisches
Patentamt
European
Patent Office
Office européen
des brevets

(11) **EP 2 949 501 A1**

(12) **EUROPEAN PATENT APPLICATION**

(43) Date of publication:
**02.12.2015 Bulletin 2015/49**

(21) Application number: **15168996.5**

(22) Date of filing: **22.05.2015**

(51) Int Cl.:
**B60L 11/18** (2006.01)     **G01C 21/34** (2006.01)
**G01C 21/36** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **26.05.2014 JP 2014107689**

(71) Applicant: **Hitachi, Ltd.
Tokyo 100-8280 (JP)**

(72) Inventors:
• **SUZUKI, Kenji
Tokyo, 100-8280 (JP)**
• **ISOMURA, Yosuke
Tokyo, 100-8280 (JP)**

(74) Representative: **MERH-IP
Matias Erny Reichl Hoffmann
Paul-Heyse-Strasse 29
80336 München (DE)**

(54) **CENTRAL APPARATUS, DRIVING SUPPORT SYSTEM, AND DRIVING SUPPORT METHOD**

(57)     A central apparatus 101 that communicates with an information terminal 102 mounted in a vehicle that travels by employing stored energy, includes: a reception unit 104 that receives position information for the information terminal 102 or for the vehicle, and a search condition inputted to the information terminal 102; a potential driving distance calculation unit 105 that calculates an energy consumption amount for each of various road links based upon the position information and the search condition, and calculates a potential driving distance based upon the energy consumption amounts that have been calculated; and a transmission unit 106 that transmits to the information terminal information relating to the potential driving distance that has been calculated for display upon the information terminal.

FIG.1

## Description

The content of the following application, upon which priority is claimed, is herein incorporated by reference: Japanese Patent Application 2014-107689 filed May 26, 2014.

The present invention relates to a central apparatus, to a driving support system, and to a driving support method that provide driving support (assist) technology and service to the driver of a vehicle.

Generally, in the case of a vehicle that travels by employing accumulated energy such as an electric automobile or the like, the distance that can be traveled upon one charge is relatively short, and this differs from the case for a vehicle powered by gasoline or the like, which can travel for a relatively long distance on one fill of the tank. Moreover, battery charging facilities are not very widespread. Due to the above, with this type of vehicle, it is very important for the user to navigate while taking into account the distance that can be traveled, so that it is very important for the user to be aware of the potential driving distance at all times. A technique for calculating a potential driving distance on the basis of the shapes of the roads in the vicinity of the vehicle, the gradients of those roads, traffic information, and vehicle operation in the past is disclosed in Patent Document #1 (Japanese Laid-Open Patent Publication 2009-025128).

With the invention of Patent Document #1, the potential driving distance is obtained by calculating electric energy consumption amounts from information such as the shapes of the roads in the vicinity of the vehicle, the gradients of those roads, traffic information, and so on. However, these electric energy consumption amounts are influenced by the classification of the road upon which the vehicle is traveling (for example, whether it is an expressway or a normal road). Due to this, it is difficult to estimate the potential driving distance with high accuracy without taking such factors into consideration. Moreover, in Patent Document #1, since the potential driving distance is displayed by employing a contour line, accordingly the same display is presented for travel upon expressways and for travel upon normal roads. Due to this, it is difficult to present an accurate potential driving distance in which these two cases are distinguished.

According to the 1 st aspect of the present invention, a central apparatus that communicates with an information terminal mounted in a vehicle that travels by employing stored energy, comprises: a reception unit that receives position information for the information terminal or for the vehicle, and a search condition inputted to the information terminal; a potential driving distance calculation unit that calculates an energy consumption amount for each of various road links based upon the position information and the search condition, and calculates a potential driving distance based upon the energy consumption amounts that have been calculated; and/or a transmission unit that transmits to the information terminal information relating to the potential driving distance that has been calculated for display upon the information terminal.

According to the 2nd aspect of the present invention, in the central apparatus according the 1 st aspect, it is preferred that the search condition is at least one of information related to road classification, information related to whether or not an on-board device other than the information terminal is used, information related to a type of the vehicle, and congestion information for a departure time or a arrival time.

According to the 3rd aspect of the present invention, a driving support system comprises: a central apparatus according to the 1st or 2nd aspect; and an information terminal that is mounted in a vehicle and that communicates with the central apparatus, wherein the information terminal receives information related to the potential driving distance of the vehicle from the central apparatus, and includes a display unit to display the information upon the information terminal.

According to the 4th aspect of the present invention, in the driving support system according to the 3rd aspect, it is preferred that the display unit presents the potential driving distance by displaying roads upon which travel is possible with a remaining amount of energy in a battery mounted to the vehicle in units of road links.

According to the 5th aspect of the present invention, in the driving support system according to the 4th aspect, it is preferred that the display unit changes a display method for the potential driving distance according to the remaining amount of energy.

According to the 6th aspect of the present invention, a driving support method for an information terminal mounted in a vehicle that travels by employing stored energy and a central apparatus that communicates with the information terminal, wherein: the information terminal comprises a display unit, transmits position information for the information terminal or for the vehicle and a search condition inputted to the information terminal to the central apparatus, receives information related to potential driving distance from the central apparatus, and presents the information upon the display unit; and the central apparatus receives the position information and the search condition from the information terminal, calculates an energy consumption amount for each of various road links based upon the position information and the search condition that have been received, calculates a potential driving distance based upon the energy consumption amounts that have been calculated, and transmits information relating to the potential driving distance that has been calculated to the information terminal.

According to the present invention, it is possible to display the potential driving distance of the vehicle to the user in a more accurate manner, according to a search condition that has been inputted and according to the current position.

BRIEF DESCRIPTION OF THE DRAWINGS

Fig. 1 is a figure showing a summary of a driving support system according to an embodiment of the present invention;
Fig. 2 is a functional block diagram showing the structure of this driving support system according to the embodiment;
Fig. 3 is a flow chart for this driving support system according to the embodiment;
Fig. 4 is a flow chart showing the procedure for calculation of potential driving distance performed by a central apparatus according to this embodiment of the present invention;
Fig. 5 is a figure showing an example of a potential driving distance generated by the central apparatus according to this embodiment;
Fig. 6 is an example of a screen displayed upon an information terminal in correspondence to certain search conditions; and
Fig. 7 is another example of a screen displayed upon an information terminal in correspondence to other search conditions.

DESCRIPTION OF EMBODIMENTS

The central apparatus according to a specific embodiment of the present invention is a central apparatus that communicates with an information terminal mounted in a vehicle that travels by employing stored energy, characterized by comprising: a reception unit that receives position information for the information terminal or for the vehicle, and a search condition inputted to the information terminal; a potential driving distance calculation unit that calculates an energy consumption amount for each of various road links on the basis of the position information and the search condition, and calculates a potential driving distance on the basis of the energy consumption amounts that have been calculated; and a transmission unit that transmits to the information terminal information relating to the potential driving distance that has been calculated for display upon the information terminal. Furthermore, when the structure described above is applied to a driving support system, the information terminal may be characterized by receiving information related to the potential driving distance of the vehicle from the central apparatus, and by comprising a display unit upon which the information is displayed by the information terminal. Moreover, the driving support method according to a specific embodiment of the present invention is a driving support method for an information terminal mounted in a vehicle that travels by employing stored energy and a central apparatus that communicates with the information terminal, characterized in that: the information terminal comprises a display unit, transmits position information for the information terminal or for the vehicle and a search condition inputted to the information terminal to the central apparatus, receives information related to potential driving distance from the central apparatus, and presents the information upon the display unit; and the central apparatus receives the position information and the search condition from the information terminal, calculates an energy consumption amount for each of various road links on the basis of the position information and the search condition which have been received, calculates a potential driving distance on the basis of the energy consumption amounts that have been calculated, and transmits information relating to the potential driving distance that has been calculated to the information terminal. With this type of structure, it becomes possible to present a more accurate potential driving distance for the vehicle to the user.

Moreover it is desirable for the search condition to be at least one of: information related to road classification such as "expressways (high speed roads)", "normal roads", or the like; information related to whether or not some on-board device other than the information terminal described above is used, such as an air conditioner or an audio device; information related to the direction of progression of the vehicle, such as a northwards orientation or the like; information related to the type of the vehicle; and congestion information that corresponds to the departure time or the arrival time. By doing this, it is possible to present a more accurate potential driving distance by taking into consideration one or more search conditions that exert an influence upon the amount of energy consumed. Moreover, the display unit of the driving support system is characterized by providing the potential driving distance by displaying the roads upon which travel is possible with the remaining amount of energy in a battery mounted to the vehicle in units of road links. It is possible to provide more accurate information to the user by calculating and displaying energy consumption amounts for each of various road links, rather than by simply taking the departure point as a start point and estimating a predetermined range as being the potential driving distance. Yet further, by changing the display method for the potential driving distance according to the remaining energy amount, it becomes possible visually to display the remaining energy amount to the user in correspondence with the travel position.

In the following, specific embodiments of the present invention will be explained with reference to the drawings.

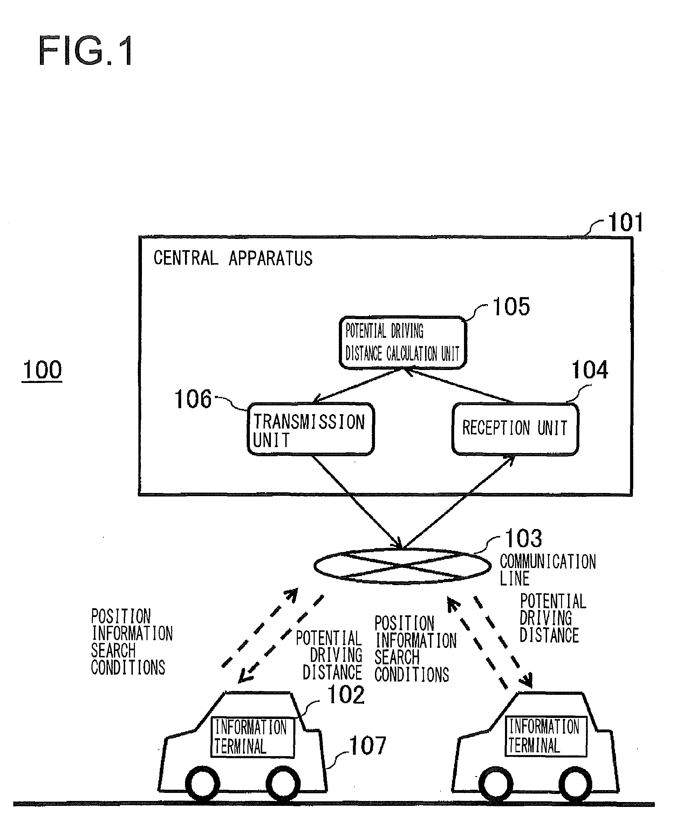

Fig. 1 is a figure showing a summary of a driving support (assist) system 100 according to an embodiment of the present invention. The driving support system shown in Fig. 1 comprises a central apparatus 101 and one or more information terminals 102 for users. The central apparatus 101 and the information terminals 102 are mutually connected together via a communication line 103. The information terminals 102 are mounted to corresponding vehicles 107 that are driven by the users. The communication line 103 may consist of a wireless communication network such as a portable telephone network or the like, or a cable communication network such as the internet or the like. Furthermore, the central apparatus 101 comprises a reception unit 104, a potential driving distance calculation unit 105, and a transmission unit 106. The reception unit 104 receives from one of the information terminals 102 position information for a vehicle 107 or for an information terminal 102, and one or more search conditions that have been inputted by the user. The potential driving distance calculation unit 105 then calculates a potential driving distance according to the position information and the search conditions that have been received from the reception unit 104. This potential driving distance that has been calculated is transmitted by the transmission unit 106 to the corresponding information terminal 102 via the communication line 103. And information is displayed upon the information terminal 102 related to the potential driving distance that has been transmitted in this manner. Due to this, driving support is provided to the user.

In the driving support system according to this embodiment, in the case of the use of dedicated terminals, terminals that are installed within the vehicles or navigation devices or the like are employed. Alternatively, smart phones, portable telephones, personal computers, tablet terminals or the like may be employed, in which case the locations in which they are used are not limited to being inside the vehicles. Moreover, the vehicles 107 may be of any types that travel by storing energy; for example, they may be electric automobiles, fuel cell automobiles, hybrid automobiles, or the like. In the case of an electric automobile, a battery that accumulates electrical energy is mounted to the vehicle 107, and information related to the battery, such as the amount of electrical energy consumed and the remaining amount of electrical energy and so on, is transmitted to the information terminal 102 according to requirements.

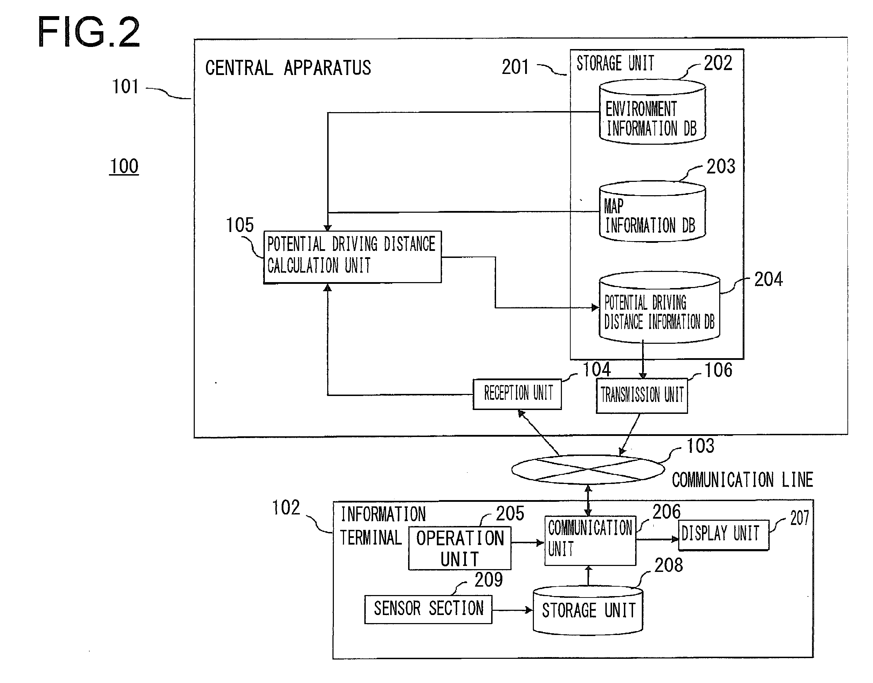

Fig. 2 is a functional block diagram showing the structure of this driving support system 100 according to an embodiment of the present invention. Among a plurality of information terminals 102 that are included in the driving support system 100, only the structure of one of these information terminals 102 is shown in Fig. 2. The structures of the other information terminals are similar. The information terminal 102 of Fig. 2 comprises a sensor section 209, a storage unit 208, an operation unit 205, a communication unit 206, and a display unit 207. The sensor section 209 includes sensors for measuring the running state of the vehicle, and may for example comprise a GPS sensor, a vehicle speed sensor, an acceleration sensor, an angular velocity sensor, a sensor for measuring the remaining amount of charge in the battery, and/or the like. The sensor section 209 stores the information acquired by these sensors in the storage unit 208. Moreover, these sensors need not necessarily be provided internally to the information terminal 102. It would also be acceptable to adopt an arrangement in which information that has been acquired from one or more sensors mounted externally to the information terminal 102 is received by the sensor section 209, and is stored in the storage unit 208.

The operation unit 205 may comprise, for example, a touch panel, a switch, a microphone, or the like, and receives actuation input or audio input from the user. Upon receipt by this operation unit 205 of a request from the user for display of the potential driving distance, this information is transmitted to the communication unit 206. And the communication unit 206 reads out information stored in the storage unit 208 and information from the operation unit 205 at a timing requested from the operation unit 205 or at predetermined timings. Moreover, via the communication line 103, the communication unit 206 issues a request for calculation of the potential driving distance to the central apparatus 101. Furthermore, in response to such a calculation request for potential driving distance, the communication unit 206 receives information related to potential driving distance transmitted from the central apparatus 101 via the communication line 103. Along with position information for the vehicle 107 or for the information terminal 102 and running state information, also information that specifies one or more search conditions, the environment around the vehicle during transmission, characteristics of the driver, characteristics of the vehicle and so on is included in this potential driving distance calculation request. On the basis of information from the sensor section 209 and information from the operation unit 205, and user information and vehicle type information stored in the storage unit 208, this information is selected, and is used for calculating the potential driving distance. The display unit 207 is a section for presenting screen display of various types of information such as information related to the potential driving distance received by the communication unit 206, map information, traffic information, locations of charging stations and so on, and may comprise a liquid crystal display or the like.

Next, the central apparatus 101 comprises a storage unit 201, a reception unit 104, a potential driving distance calculation unit 105, and a transmission unit 106. The storage unit 201 is a section for accumulating and storing data of various types, and may, for example, be a storage medium such as a hard disk or a memory or the like. In Fig. 2, an environment information database (DB) 202 in which traffic information and so on is stored, a map information database (DB) 203 in which map information is stored, and a potential driving distance information database (DB) 204 are provided in the storage unit 201. The traffic information that is stored in the environment information DB 202 includes required time periods, speeds, levels of congestion, and so on for link units that have been created from on-road sensor data or probe data. In the map information DB 203, road intersections and specified points upon roads are defined as being nodes, and map information in which road sections that join between nodes are defined as links is stored therein. For each of these links, a road classification such as "expressway" or "normal road" or the like, gradient information, the legal speed limit, traffic regulation information, and so on is defined.

The reception unit 104 receives the information that has been transmitted from the information terminal 102. With the objective of calculating the potential driving distance, this information that has been received is transmitted to the potential driving distance calculation unit 105. And the potential driving distance calculation unit 105 generates potential driving distance information by a procedure that will be described hereinafter on the basis of the information from the reception unit 104 and environment information and/or map information that is stored in the storage unit 201. This potential driving distance information that has been generated is stored in the potential driving distance information DB 204. Then the transmission unit 106 transmits information stored in the storage unit 201 related to the potential driving distance via the communication line 103 to the communication unit 206 of that information terminal 102 which issued the request for the potential driving distance. By doing this, in response to a request from one of the information terminals 102, information related to the potential driving distance is transmitted to that information terminal 102.

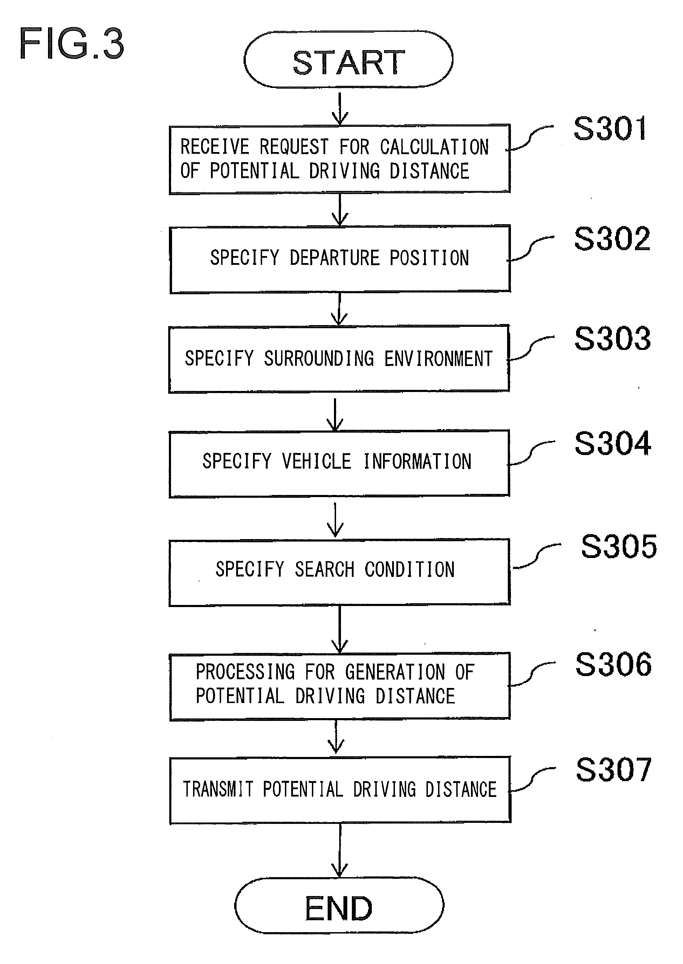

Now, the flow of processing by this central apparatus 101 will be described in concrete terms with reference to Fig. 3. Fig. 3 is a flow chart for processing that is executed by the central apparatus 101 when a potential driving distance calculation request has been received. First, the reception unit 104 receives information that has been transmitted from the information terminal 102 in relation to a potential driving distance calculation request (step S301). Then, from this information transmitted from the information terminal 102, the potential driving distance calculation unit 105 specifies information for the point of departure when obtaining the potential driving distance (step S302). In relation to the departure point it should be understood that there are some cases in which the position of the information terminal 102 or of the vehicle that has been obtained from a GPS sensor of the sensor section 209 becomes the departure point, there are some cases in which some desired location that has been specified by the user upon the operation unit 205 is specified as the departure point, and there are also some cases in which an intermediate point that is passed through upon a travel route to the destination is specified as the departure point. Next, the potential driving distance calculation unit 105 performs specification of the surrounding environment (step S303). As this surrounding environment specification, for example, the weather, the air temperature, traffic information, the road surface state and so on may be acquired from the environment information DB 202. Moreover, the potential driving distance calculation unit 105 performs specification of the vehicle information transferred from the information terminal 102 (step S304). This vehicle information is information that exerts an influence upon the consumption of battery energy by the vehicle, such as the type of the vehicle, the weight of the vehicle, the battery capacity, the battery remaining amount, and so on. It would be possible to arrange for this vehicle information to be received from the information terminal 102 when calculation of the potential driving distance is requested; or it would also be possible for this information to be registered in the central apparatus 101 in advance. For the battery remaining amount, in some cases a battery remaining amount that has been acquired from the sensor section 209 of the information terminal 102 is employed; and it would also be acceptable for the user to specify any desired amount from the operation unit 205 as being the battery remaining amount.

Next, the potential driving distance calculation unit 105 specifies one or more search conditions on the basis of the information that has been transmitted from the information terminal 102 (step S305). For example, the following conditions for which there is some possibility of exertion of some influence upon the potential driving distance may be specified as search conditions:

(1) Classification of the subject road when calculating the potential driving distance (i.e., whether a potential driving distance that gives priority to expressways is to be calculated, or a potential driving distance when only normal roads are used is to be calculated);
(2) Whether or not any on-board device other than the information terminal 102 will be used (i.e., whether a potential driving distance when an air conditioner is used is to be calculated, or a potential driving distance when such an air conditioner is not used is to be calculated);
(3) Whether or not the direction of movement of the vehicle is to be considered;
(4) Information related to the vehicle type;
(5) Congestion information for the departure time, the arrival time, and so on.

The result is that the potential driving distance that is generated in step S306 will differ according to the search condition or conditions that have been set in this step S305. In the following, specific examples will be described and explained.

For example, if in the search condition (1) the subject roads are set to be only normal roads, then expressways will be excluded from the potential driving distance. Moreover, since the air resistance is increased when the running speed of the vehicle is high, accordingly, generally, the potential driving distance when traveling upon expressways becomes shorter as compared to the case when the potential driving distance is generated for only normal roads. Here, as is per se known, the amount of energy that is consumed due to air resistance may be determined by using the following equation: amount of energy consumed due to air resistance= $(1/2) \cdot \rho \cdot Cd \cdot A \cdot V^2$, where

p: air density
Cd: coefficient of air resistance
A: projected area
V: speed

Moreover, for the amount of energy consumed due to air resistance, it would also be possible to employ a value that has been obtained by statistical processing based upon values actually measured for travel in the past.

Yet further if, in search condition (2), the setting for the air conditioner to be used is established, then the potential driving distance with the amount of energy consumed by the air conditioner being taken into consideration is reduced, as compared to the case if the air conditioner were not to be used. Here the amount of energy consumed by the air conditioner may, for example, be calculated according to the following equation:

$$\text{(amount of energy consumed by air conditioning system)} = \text{(air conditioner consumption per unit time)} \times \text{(time interval)}$$

As will be explained hereinafter, when obtaining the potential driving distance in step S306 of Fig. 3, the type of route that the vehicle will travel through the link units is calculated. For this, the time interval in the above equation is obtained as being the travel time for a route through the link units. Moreover, for the amount of energy consumed by the air conditioner, it would also be acceptable to employ a value that has been obtained by statistical processing based upon values actually measured for travel in the past. In this statistical processing, it is possible to obtain the amount of energy consumed by the air conditioner at high accuracy by employing values for each type of vehicle, for each region, and for each season.

Moreover, by the direction of progression of the vehicle being selected for consideration in the search condition (3), the potential driving distance is generated by taking into consideration the direction of progression of the vehicle. As a result, if for example the potential driving distance has been generated by taking a departure point upon an expressway, then it is necessary to leave at the next interchange, make a U-turn, and progress on the opposite side as to the road on the opposite side to the current direction of progression of the vehicle. Due to this, the potential driving distance of the vehicle in its current direction of progression is generated as being relatively greater, while the potential driving distance of the vehicle in the reverse direction is generated as being relatively more restricted.

Furthermore, by information related to the type of the vehicle being inputted in the search condition (4), it is possible to take into consideration the amount of energy consumption for the classification of the vehicle, which is caused by the weight of the vehicle and so on. For example, the potential driving distance of a vehicle whose weight is large is smaller than the potential driving distance of a vehicle whose weight is small. Moreover, the energy storage capacity also varies according to the vehicle. Due to this, the potential driving distance of a vehicle that is equipped with a high energy capacity battery is greater than the potential driving distance of a small vehicle that that is equipped with a low energy capacity battery.

Yet further, by the departure time being inputted in the search condition (5), it is possible to acquire, from the environment information DB 202, congestion information and so on that corresponds to this time period. Due to this, it becomes possible to generate the potential driving distance by taking this information into account. For example, if the departure time is set in the morning, then the time period taken for driving will be increased, since generally congestion is worse in the morning. As a result, the potential driving distance becomes restricted, as compared to the case of a non-congested time band.

Next, the potential driving distance calculation unit 105 calculates the potential driving distance on the basis of the various types of information that were acquired from step S302 through step S305 (step S306). And information related to the potential driving distance that has thus been calculated is stored in the storage unit 204. This information related to the potential driving distance that has been calculated is transmitted by the transmission unit 106 to the information terminal 102 via the communication line 103 (step S307).

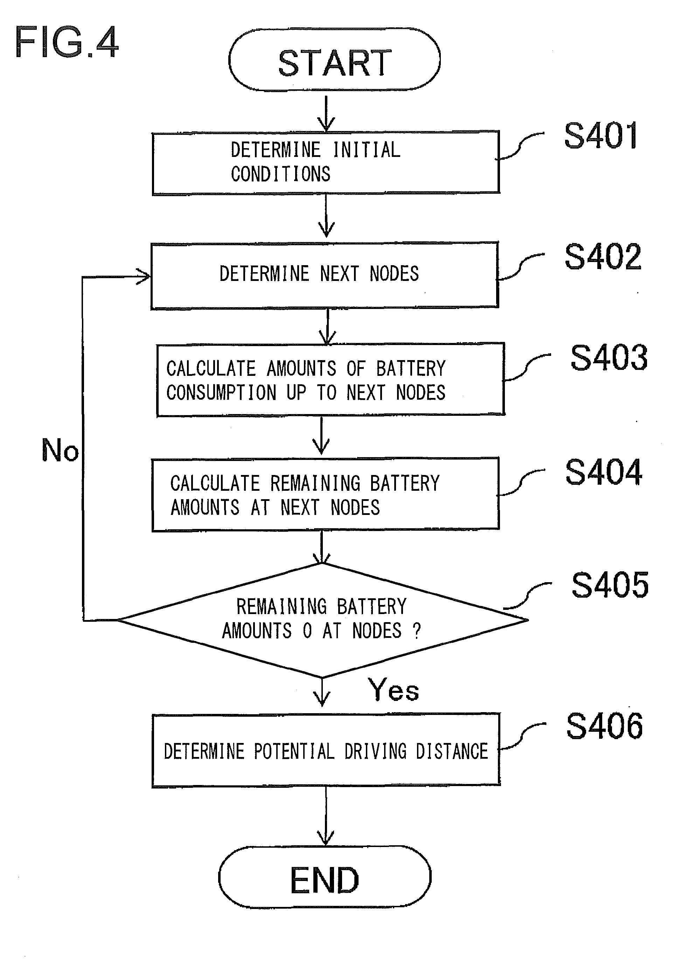

Next, Fig. 4 is a flow chart showing the processing of the step S306 of Fig. 3 in concrete terms. First, the potential driving distance calculation unit 105 determines initial conditions, such as position information that specifies from what position the potential driving distance is to be calculated, the remaining amount in the battery of the vehicle, the search conditions, and so on (step S401). Next, on the basis of the search conditions that were specified in step S305 of Fig. 3, the potential driving distance calculation unit 105 determines the next nodes toward the periphery from the position that has been designated (step S402). As the method for determining the next nodes, a mathematical technique such as the conventional Dijkstra method or the like may be used; indeed, any method that finds a cost-minimum path based upon the travel times (i.e. the speeds) or the distances of the road link units may be employed. Moreover, in the case of an electric automobile, instead of the travel times, it would also be acceptable to employ the amounts of electric energy consumed as the costs, and to calculate a path for which the total electric energy consumption amount becomes a minimum. At this time, if the search condition determined in step S305 is the condition that the calculation should be performed by only employing normal roads, then nodes upon expressways are not selected during node selection. In this manner, it is possible to obtain distinctively both a potential driving distance when traveling is performed only upon normal roads and also a potential driving distance when expressways are utilized.

In step S403, the potential driving distance calculation unit 105 calculates, by road link units, the electric energy consumption amounts up to the next nodes that were determined in step S402, respectively. Here, the electric energy consumption amounts are calculated while,taking into account information about the surrounding environment such as the gradients of the roads, the vehicle type characteristics, the driving characteristics of the user, traffic information, and so on. Then in step S404, from the energy consumption amounts that were calculated in step S403, the potential driving distance calculation unit 105 calculates the battery remaining amounts at the next nodes. Next in step S405 the potential driving distance calculation unit 105 makes a decision as to whether or not each of the battery remaining amounts has become zero at each of the next nodes. If the result is that this is a node for which the battery remaining amount is greater than zero, the flow of control returns to step S402 in which next nodes toward the periphery are determined, and the processing performed in steps S402 through S405 is repeated. On the other hand, if the battery remaining amounts have become zero at all of the next nodes, then the processing loop ends at this step S405, and the flow of control proceeds to step S406 in which the potential driving distance is determined. Here, on the basis of the nodes that have been finally determined in the step S402, the potential driving distance calculation unit 105 generates a potential driving distance for presentation to the user (step S406).

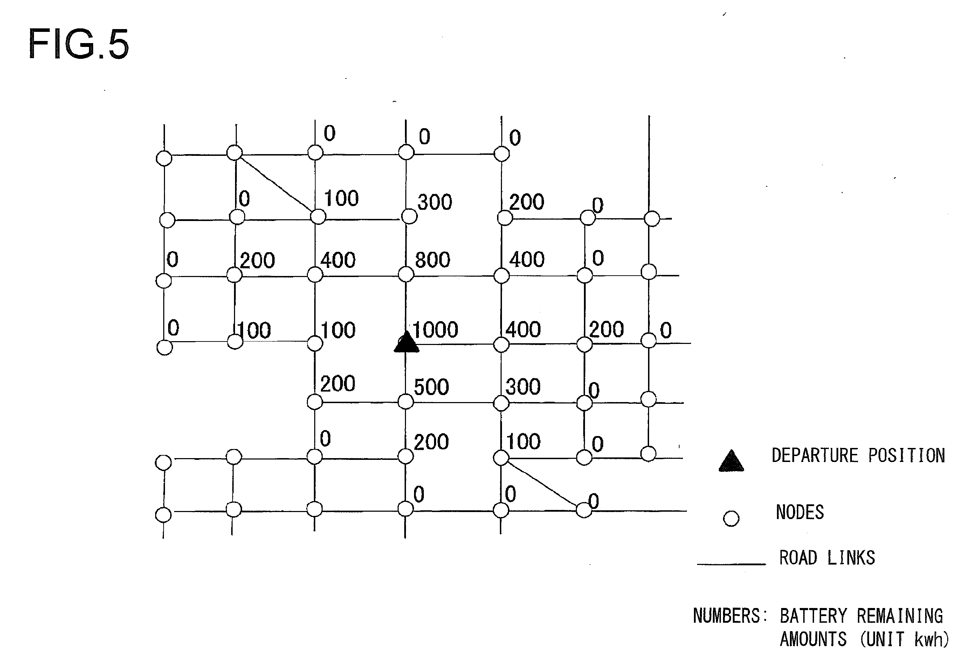

Next, an example of a potential driving distance calculated by the potential driving distance calculation unit 105 will be explained with reference to Fig. 5. In Fig. 5, the nodes are represented as white circles, and the solid lines that connect between the nodes represent road links. The triangular mark at the center of the figure represents the departure position for calculating this potential driving distance. And the number at the upper right of each node represents the battery remaining amount at that node. In this example, the battery remaining amount at the departure point is 1000 kWh. It should be understood that, while no battery remaining amounts are shown at any nodes beyond nodes for which the battery remaining amount is zero, this is because the processing loop of step S405 has terminated.

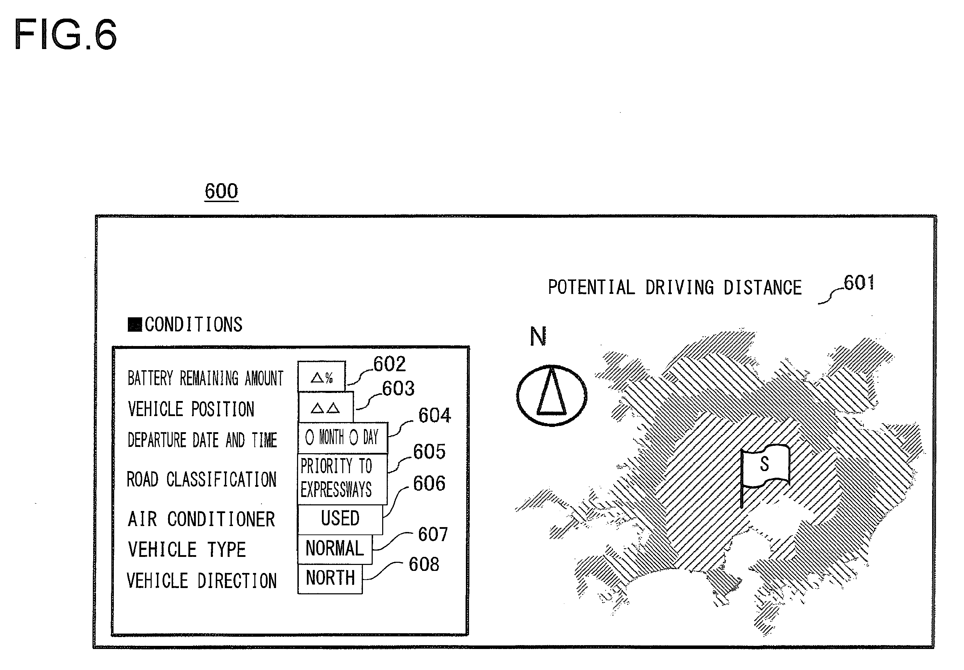

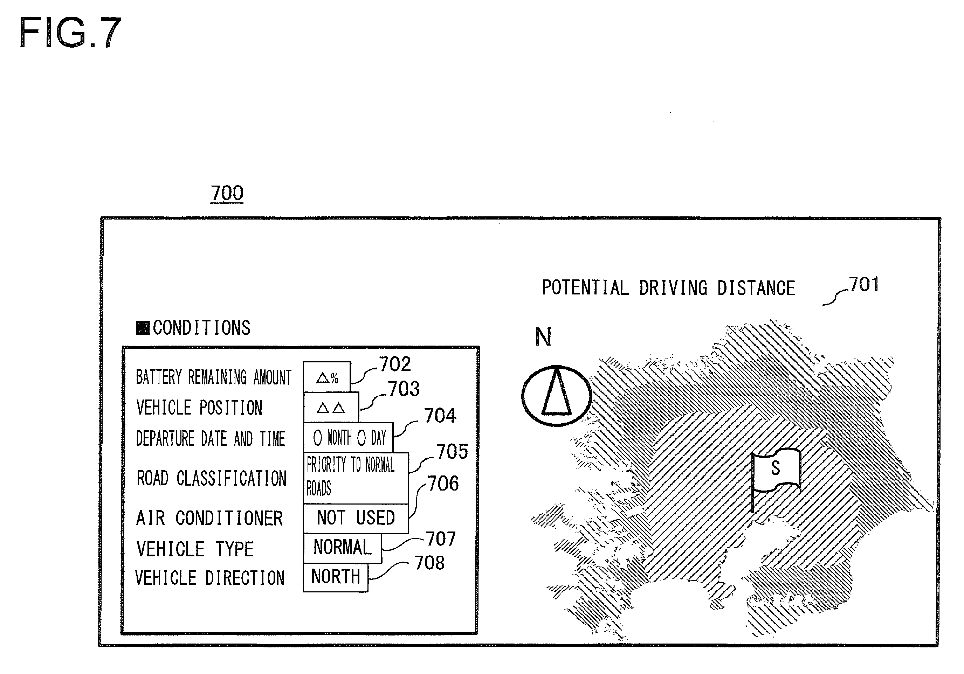

Next, screens that are displayed upon the information terminal 102 will be explained. Figs. 6 and 7 are examples of screens via which the potential driving distance is displayed upon the display unit 207 of the information terminal 102. Potential driving distances 601 and 701 that have been transmitted from the central apparatus 101 are presented on the screens shown in these Figs. 6 and 7, and the color (gradation) of the display is shown as changing in steps according to the magnitude of the battery remaining amount. It should be understood that it would also be acceptable to arrange for the method for displaying the potential driving distance to be a variation of some other screen characteristic according to the battery remaining amount (for example, change of color, change of transmittivity, or change of line thickness). Moreover, the search conditions for calculating the potential driving distances are shown on the left sides of the screens of Figs. 6 and 7. The battery remaining amount 602 (702) when obtaining the potential driving distance, the position 603 (703) of the subject vehicle or of the information terminal at the departure point when calculating the potential driving distance, the departure date and time 604 (704) when calculating the potential driving distance, a road type option 605 (705) that is given as a condition upon the classification of the roads upon which travel is to be performed, an air conditioner use option 606 (706) that shows whether or not the vehicle air conditioner is to be used, a vehicle type 607 (707) that specifies the make of the vehicle, and a vehicle movement direction 608 (708) that specifies the direction of progression of the vehicle, are examples of search conditions. Any desired one or more of these search conditions may be selected. It should be understood that, in Fig. 6, the potential driving distance is shown when "priority to expressways" has been selected as the road classification option and "used" has been selected as the air conditioner use option, and so on. Moreover, in Fig. 7, the potential driving distance is shown when "priority to normal roads" has been selected as the road classification option and "not used" has been selected as the air conditioner use option, and so on.

The embodiment and any variant embodiments described above have only been provided as examples; the present invention is not to be considered as being limited by the details thereof, provided that the essential characteristics of the present invention are preserved. Thus, the present invention is not limited to the embodiment described above, and can be altered in various different ways, provided that the range of its essential scope is not deviated from.

**Claims**

1. A central apparatus that communicates with an information terminal mounted in a vehicle that travels by employing stored energy, comprising:

   a reception unit (104) that receives position information for the information terminal or for the vehicle, and a search condition inputted to the information terminal;

a potential driving distance calculation unit (105) that calculates an energy consumption amount for each of various road links based upon the position information and the search condition, and calculates a potential driving distance based upon the energy consumption amounts that have been calculated; and

a transmission unit (106) that transmits to the information terminal information relating to the potential driving distance that has been calculated for display upon the information terminal.

2. The central apparatus according to Claim 1, wherein
the search condition is at least one of information related to road classification, information related to whether or not an on-board device other than the information terminal is used, information related to a type of the vehicle, and congestion information for a departure time or a arrival time.

3. A driving support system, comprising:

a central apparatus (101) according to Claim 1 or 2; and
an information terminal (102) that is mounted in a vehicle and that communicates with the central apparatus (101), wherein
the information terminal (102) receives information related to the potential driving distance of the vehicle from the central apparatus (101), and includes a display unit to display the information upon the information terminal.

4. The driving support system according to Claim 3, wherein
the display unit presents the potential driving distance by displaying roads upon which travel is possible with a remaining amount of energy in a battery mounted to the vehicle in units of road links.

5. The driving support system according to Claim 3 or 4, wherein
the display unit changes a display method for the potential driving distance according to the remaining amount of energy.

6. A driving support method for an information terminal mounted in a vehicle that travels by employing stored energy and a central apparatus (101) that communicates with the information terminal (102), wherein:

the information terminal (102) comprises a display unit, transmits position information for the information terminal (102) or for the vehicle and a search condition inputted to the information terminal (102) to the central apparatus (101), receives information related to potential driving distance from the central apparatus (101), and presents the information upon the display unit; and
the central apparatus (101) receives the position information and the search condition from the information terminal (102) calculates an energy consumption amount for each of various road links based upon the position information and the search condition that have been received, calculates a potential driving distance based upon the energy consumption amounts that have been calculated, and transmits information relating to the potential driving distance that has been calculated to the information terminal (102).

# FIG.1

CENTRAL APPARATUS — 101

POTENTIAL DRIVING
DISTANCE CALCULATION UNIT — 105

100

106 — TRANSMISSION UNIT

RECEPTION UNIT — 104

103 — COMMUNICATION LINE

POSITION
INFORMATION
SEARCH
CONDITIONS

POTENTIAL
DRIVING
DISTANCE

POSITION
INFORMATION
SEARCH
CONDITIONS

POTENTIAL
DRIVING
DISTANCE

102

INFORMATION TERMINAL — 107

INFORMATION TERMINAL

# FIG.2

EP 2 949 501 A1

# FIG.3

```
        ┌─────────────┐
        │    START    │
        └─────────────┘
               │
               ▼
┌────────────────────────────────┐
│ RECEIVE REQUEST FOR CALCULATION │─── S301
│ OF POTENTIAL DRIVING DISTANCE   │
└────────────────────────────────┘
               │
               ▼
┌────────────────────────────────┐
│   SPECIFY DEPARTURE POSITION    │─── S302
└────────────────────────────────┘
               │
               ▼
┌────────────────────────────────┐
│  SPECIFY SURROUNDING ENVIRONMENT│─── S303
└────────────────────────────────┘
               │
               ▼
┌────────────────────────────────┐
│    SPECIFY VEHICLE INFORMATION  │─── S304
└────────────────────────────────┘
               │
               ▼
┌────────────────────────────────┐
│     SPECIFY SEARCH CONDITION    │─── S305
└────────────────────────────────┘
               │
               ▼
┌────────────────────────────────┐
│   PROCESSING FOR GENERATION OF  │─── S306
│   POTENTIAL DRIVING DISTANCE    │
└────────────────────────────────┘
               │
               ▼
┌────────────────────────────────┐
│ TRANSMIT POTENTIAL DRIVING DISTANCE │─── S307
└────────────────────────────────┘
               │
               ▼
        ┌─────────────┐
        │     END     │
        └─────────────┘
```

FIG.4

START

↓

DETERMINE INITIAL CONDITIONS — S401

↓

DETERMINE NEXT NODES — S402

↓

CALCULATE AMOUNTS OF BATTERY CONSUMPTION UP TO NEXT NODES — S403

↓

CALCULATE REMAINING BATTERY AMOUNTS AT NEXT NODES — S404

↓

REMAINING BATTERY AMOUNTS 0 AT NODES ? — S405

No → (back to S402)

Yes ↓

DETERMINE POTENTIAL DRIVING DISTANCE — S406

↓

END

# FIG.5

△ DEPARTURE POSITION

○ NODES

——— ROAD LINKS

NUMBERS: BATTERY REMAINING
AMOUNTS (UNIT kwh)

EP 2 949 501 A1

# FIG.6

<u>600</u>

POTENTIAL DRIVING DISTANCE ⟋601

■CONDITIONS

| | |
|---|---|
| BATTERY REMAINING AMOUNT | △% ⟋602 |
| VEHICLE POSITION | △△ ⟋603 |
| DEPARTURE DATE AND TIME | ○ MONTH ○ DAY ⟋604 |
| ROAD CLASSIFICATION | PRIORITY TO EXPRESSWAYS ⟋605 |
| AIR CONDITIONER | USED ⟋606 |
| VEHICLE TYPE | NORMAL ⟋607 |
| VEHICLE DIRECTION | NORTH ⟋608 |

N

S

EP 2 949 501 A1

# FIG.7

700

POTENTIAL DRIVING DISTANCE — 701

■CONDITIONS

| | |
|---|---|
| BATTERY REMAINING AMOUNT | △% — 702 |
| VEHICLE POSITION | △△ — 703 |
| DEPARTURE DATE AND TIME | ○ MONTH ○ DAY — 704 |
| ROAD CLASSIFICATION | PRIORITY TO NORMAL ROADS — 705 |
| AIR CONDITIONER | NOT USED — 706 |
| VEHICLE TYPE | NORMAL — 707 |
| VEHICLE DIRECTION | NORTH — 708 |

N

S

EP 2 949 501 A1

**EP 2 949 501 A1**

European Patent Office
Europäisches Patentamt
Office européen des brevets

## EUROPEAN SEARCH REPORT

Application Number

EP 15 16 8996

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/084931 A1 (HITACHI AUTOMOTIVE SYSTEMS LTD [JP]) 13 June 2013 (2013-06-13) * the whole document * * in particular: * * figures 2,4B,5 * * section referring to the first example * ----- | 1-6 | INV. B60L11/18 G01C21/34 ADD. G01C21/36 |
| X | WO 2014/024604 A1 (SUMITOMO ELECTRIC SYSTEM SOLUTIONS CO LTD [JP]) 13 February 2014 (2014-02-13) * the whole document * * in particular: * * figures 1-5,7,9-12 * * sections "1. Information-System", "2. Path Route Arithmetic Unit", "3. Calculation of the Path Route which can be flown", "4. Example of a Display of the Path Route which can be flown" * ----- | 1,3-6 | |
| X | WO 2014/068685 A1 (PIONEER CORP [JP]) 8 May 2014 (2014-05-08) * the whole document * * in particular: * * figures 15-1,15-2,15-3,16 * * description of the second embodiment * ----- | 1-6 | TECHNICAL FIELDS SEARCHED (IPC) B60L G01C |

The present search report has been drawn up for all claims

| Place of search | Date of completion of the search | Examiner |
|---|---|---|
| The Hague | 8 October 2015 | Albrecht, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 8996

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2015

| Patent document cited in search report | | Publication date | Patent family member(s) | Publication date |
|---|---|---|---|---|
| WO 2013084931 | A1 | 13-06-2013 | CN     104024800  A<br>EP       2789977  A1<br>JP  WO2013084931  A1<br>US     2014303826  A1<br>WO     2013084931  A1 | 03-09-2014<br>15-10-2014<br>27-04-2015<br>09-10-2014<br>13-06-2013 |
| WO 2014024604 | A1 | 13-02-2014 | NONE | |
| WO 2014068685 | A1 | 08-05-2014 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014107689 A

- JP 2009025128 A